# EUROPEAN PATENT SPECIFICATION

(11) **EP 3 491 936 B1**
(45) Date of publication and mention of the grant of the patent: **01.05.2024**
(21) Application number: 16910537.6
(22) Date of filing: 28.07.2016
(51) Int. Cl.: A23P 30/38, A23L 7/161, A23L 23/10, A23P 30/30

(54) **INSTANT FOOD**
INSTANTLEBENSMITTEL
ALIMENT INSTANTANÉ

(43) Date of publication of application: 05.06.2019
(73) Proprietor: Nissin Foods Holdings Co., Ltd., Osaka-shi, Osaka 532-8524 (JP)
(72) Inventor: SAEKI, Kentaro, Osaka-shi Osaka 532-8524 (JP); NOGUCHI, Natsuki, Osaka-shi Osaka 532-8524 (JP); KOMATSU, Masashi, Osaka-shi Osaka 532-8524 (JP); NOGAMI, Takashi, Osaka-shi Osaka 532-8524 (JP); HADA, Masanori, Osaka-shi Osaka 532-8524 (JP); TANAKA, Mitsuru, Osaka-shi Osaka 532-8524 (JP)
(74) Representative: Mewburn Ellis LLP
(86) International application number: PCT/JP2016/072130
(87) International publication number: WO 2018/020634

(56) References cited:
- WO-A1-00/44243
- WO-A1-2013/146592
- JP-A- H09 266 761
- JP-A- S51 121 542
- JP-A- S61 132 148
- JP-A- S61 173 754
- JP-A- 2000 513 221
- JP-A- 2012 214 037
- JP-A- 2012 214 038
- RU-C1- 2 592 875
- US-A- 4 233 327

## Description

### Technical Field

The present invention relates to an instant food product. More specifically, the present invention relates to an instant food product comprising puffed dried rice eatable with a thick and rich sauce by pouring hot water.

### Background Art

In recent years, there has been a growing demand for instant food products that can be immediately provided. One example of the instant food product includes an instant food product comprising puffed dried rice.

In this context, the puffed dried rice refers to rice obtained by gelatinizing starch, and then drying the resulting rice at a high temperature to puff its tissue. For eat, the puffed dried rice is generally reconstituted by adding water, followed by heat cooking, or reconstituted by pouring hot water (see, for example, Patent Literatures 1 and 2) RU 2592875, US 4233327 and WO 00/44243 disclose dried puffed rice.

Some instant food products comprising puffed dried rice are commercially available as products that are eaten with thick and rich sauces. One example of such an instant food product is curried rice and rice with hashed meat.

### Citation List

### Patent Literature

Patent Literature 1: Japanese Patent Laid-Open No. 2014-158423
Patent Literature 2: Japanese Patent Laid-Open No. 51-32751

For commercially available instant food products comprising puffed dried rice, such as curried rice or rice with hashed meat, a container is filled with granulated powdered soup and puffed dried rice. Such a commercially available instant food product is eatable by pouring water or hot water and heating the resultant in a microwave oven.

However, when the commercially available instant food product is cooked by merely pouring hot water, for example, in the outdoors without a microwave oven, the powdered soup and the puffed dried rice compete for water absorption. Therefore, the puffed dried rice can hardly absorb water, disadvantageously resulting in poor reconstitution. Furthermore, water-absorbed powdered soup covers the partial surface of the puffed dried rice and thereby further inhibits the water absorption of the puffed dried rice. These problems arise because mere pouring of hot water cannot cause convection in the container so that the puffed dried rice cannot sufficiently absorb water. Particularly, this is a problem for the puffed dried rice of Patent Literature 1, which easily sinks to the bottom of the container. Hence, the conventional instant food products comprising puffed dried rice, such as curried rice or rice with hashed meat, are very difficult to cook by merely pouring hot water.

The present invention has been made in light of the problems described above. Specifically, an object of the present invention is to provide an instant food product comprising puffed dried rice eatable with a thick and rich sauce, such as curried rice or rice with hashed meat, wherein the instant food product can be cooked even in the outdoors or indoors without a microwave oven so as to be eatable.

The present inventors have conducted diligent studies on a method for prioritizing the water absorption of puffed dried rice ahead of a powdered seasoning upon cooking by pouring hot water. The present inventors have consequently completed the present invention by finding that the water absorption of puffed dried rice can be prioritized ahead of a solid seasoning by changing the powdered seasoning to the solid seasoning and also by temporarily floating the puffed dried rice upon pouring of hot water.

To attain the object, the present invention provides an instant food product comprising puffed dried rice eatable by pouring hot water, wherein the puffed dried rice is directly stored in a container together with a solid seasoning.

According to such a configuration, the water absorption of the puffed dried rice can be prioritized by use of the solid seasoning. As a result, the puffed dried rice can be cooked by merely pouring hot water without the use of a heat cooker such as a microwave oven so as to be eatable with a thick and rich sauce. Since the puffed dried rice and the solid seasoning are directly stored in a container, the instant food product can be readily cooked.

In the configuration described above, the puffed dried rice preferably has a bulk specific gravity of 0.43 to 0.53 g/ml and a final moisture content of 5% by mass or more and 10% by mass or less.

According to such a configuration, the puffed dried rice temporarily floats upon pouring of hot water. As a result, the puffed dried rice is separated from the solid seasoning in the container so that the puffed dried rice can reliably absorb water without being influenced by the solid seasoning.

In the configuration described above, the container is preferably a container made of heat-insulation foam paper.

According to such a configuration, the container is easy to hold during eat by virtue of a heat insulating effect.

The present invention can provide an instant food product comprising puffed dried rice eatable with a thick and rich sauce through cooking by pouring hot water. As a result, the instant food product can be eaten even in an environment without a microwave oven, for example, in mountains, at the sea, or at the time of disaster.

### Description of Embodiments

Hereinafter, a preferred mode for carrying out the present invention will be described.

The raw material rice used in the present invention is not particularly limited, and various kinds such as Japonica rice, Indica rise, long grain rice, or short grain rice can be used. Furthermore, old rice can also be effectively utilized.

Next, the process of producing puffed dried rice using the raw material rice will be described.

First, a rice washing step will be described. In the rice washing step, the raw material rice after milling is washed. In this operation, the rice washing method is not particularly limited, and a technique known in the art can be used.

Next, a dipping step will be described. The dipping step is not an essential step and is appropriately optional.

In the dipping step, the raw material rice thus washed is dipped in water for water absorption. The dipping time is preferably 30 minutes or longer for dipping white rice, though depending on seasons, air temperature, and the type and state of the rice. The dipping of the washed raw material rice in water allows the rice to absorb water and realizes cooked rice having good texture and eating quality.

In the present invention, an oil, an emulsifier, polyphosphate, an antioxidant, or an enzyme such as amylase may be added as a sub material. Also, a seasoning such as salt, soy sauce, or sugar may be used for seasoning.

Next, a step of cooking rice will be described. The method for cooking rice is not particularly limited, and the rice can be cooked by a usual method such as cooking rice by gas, cooking rice by electrical, cooking rice by IH, or cooking rice by steaming. As for the amount of water added in cooking rice, the rice can be cooked by appropriately adjusting the amount of water added so as to obtain cooked rice with a texture having the desired stickiness and hardness after cooking rice. For example, the rice can be cooked by appropriately adjusting the amount of water added such that the yield of cooked rice is 1.6 to 2.6 (corresponding to 49 to 68% in terms of moisture content just after cooking). In this context, the yield of cooked rice refers to the weight ratio of rice after cooking rice to the weight of the rice before cooking rice.

In general, for cooked rice having moderate stickiness and hardness, the yield of cooked rice can be on the order of 1.8 to 2.4 (corresponding to 53 to 63% in terms of moisture content just after cooking).

Finally, a processing step will be described. The processing step is the step of processing the cooked rice into puffed dried rice by drying, pressing and flattening, and puffing and drying.

Specifically, the cooked rice after cooking rice or steaming is loosened and then subjected to primary drying into a state that permits pressing and flattening to adjust its moisture content. The primary drying is preferably performed by draft at 100°C or lower, and the rice is preferably dried until its moisture content becomes 20% to 30% (% by weight; the same holds true for the description below), particularly preferably 22% to 28%. By the drying in this range, the rice has a state that is not broken by pressing and flattening.

After the moisture content adjustment by primary drying, pressing and flattening are performed. A method of allowing rice grains to pass through the narrow space between rolls is simplest as the pressing and flattening. Alternatively, the rice may be pressed using a pressing machine, a grinding machine, or the like. In the case of pressing and flattening using rolls, the interval between the rolls can be set to on the order of 0.1 to 1 mm. It is particularly preferred to press the rice at a roll interval of 0.10 mm or larger and 0.60 mm or smaller. Also, the rice can be pressed and flattened a plurality of times. The pressing and flattening break tissues within the rice grains, and this break facilitates puffing. Stronger pressing and flattening further facilitates puffing. In the present invention, a roll interval of 0.15 mm or larger and 0.45 mm smaller is preferred for a better texture.

After the pressing and flattening, the moisture content is adjusted by secondary drying before puffing and drying. The secondary drying is performed for obtaining an appropriate puffed state. The secondary drying is preferably performed by draft at 100°C or lower, as in the primary drying. The rice is preferably dried until its moisture content becomes 10% to 25%, particularly preferably 12% to 18%, after the drying. The rice thus dried is preferably sieved, followed by puffing and drying at a high temperature exceeding 100°C.

The puffing and drying can be performed in a high-temperature and high-velocity drier for drying or baking food products. In the present invention, the intra-chamber temperature is set to a temperature higher than 100°C, preferably 130°C or higher, more preferably 140°C or higher, for sufficient puffing and improved reconstitutability. In the present invention, the bulk specific gravity is adjusted to 0.43 g/ml or more and 0.53 g/ml or less such that the puffed dried rice can float in water. In order to puff the rice to attain such a bulk specific gravity, the degree of puffing can be adjusted by controlling temperature, air velocity, time, etc.

However, puffing at a very high temperature for a short time tends to decrease a bulk specific gravity due to excessive puffing. Furthermore, there arise problems such as uneven puffing and insufficient drying ascribable to a high moisture content. Accordingly, in the case of using a high-temperature and high-velocity dryer, the puffing and drying are preferably performed at lower than 160°C.

In order to evenly puff the rice by heating at a high temperature at once, the rice is preferably puffed and dried, for example, by spraying high-temperature and high-velocity airflow having an air velocity of 40 m/s or more to the rice grains. In this operation, saturated steam may be added into the chamber of the high-temperature and high-velocity drier to increase the amount of energy applied to the rice. Alternatively, the rice may be puffed by spraying superheated steam instead of high-temperature and high-velocity airflow.

The puffing and drying time totally differs depending on temperature, air velocity, and the amount of rice and is appropriately adjusted. Broadly speaking, the puffing and drying time can be on the order of 30 seconds to 2 minutes. In this way, the rice can be puffed and dried such that its final moisture content is 5% to 10% by mass and its bulk specific gravity is 0.43 g/ml or more and 0.53 g/ml or less.

Examples of the solid seasoning used in the present invention include roux for curried rice, stew, or the like, and seasonings solidified by tableting. The solid seasoning used in the present invention is preferably heavier than the specific gravity of water and maintains its shape unless subjected to external force such as stirring. The solid seasoning heavier than the specific gravity of water is in a state where the solid seasoning remains settled at the bottom of a container when hot water is poured thereto. In the state where the solid seasoning settles at the bottom of a container, the puffed dried rice is separated from the solid seasoning in the container so that the influence of the solid seasoning on the water absorption of the puffed dried rice can be reduced. Furthermore, the solid seasoning that maintains its shape unless subjected to external force can prevent the solid seasoning that starts to melt from covering the surface of the water-absorbed puffed rice. It is preferred that the solid seasoning should be softened while maintaining its shape as much as possible by pouring hot water. The softened seasoning easily blends with the puffed dried rice when subjected to external force.

The puffed dried rice used in the present invention is produced, for example, as described above and has the property of temporarily floating in water. A container is filled directly with such puffed dried rice and further filled directly with a dried ingredient and the solid seasoning. Then, the container is hermetically sealed to prepare a commercial instant rice product in the container.

The container is preferably a rigid container such as a cup-like container or a bowl-like container and is more preferably a container made of heat-insulated foamed paper. Alternatively, a container of flexible packaging material type such as a standing pouch may be used. The container is provided at its inside with a waterline that indicates a necessary amount of water for reconstitution and cooking. When the container is transparent, the container may be provided at its outside with a waterline.

The method for eating the instant food product of the present invention comprising puffed dried rice involves opening the container, and pouring hot water up to the waterline provided in the container through the opening. Then, the puffed dried rice is reconstituted by waiting for several minutes after the pouring of hot water. Then, the contents are stirred with a spoon or the like so that the solid seasoning and the puffed dried rice are unified for eat. In this context, the puffed dried rice used in the present invention temporarily float in hot water when hot water is poured thereto. By contrast, the solid seasoning remains settled at the bottom of the container. Hence, the water absorption of the puffed dried rice is not influenced by the solid seasoning. Thus, the puffed dried rice can be reconstituted by water absorption. The water-absorbed puffed dried rice settles gradually so as to be deposited on the solid seasoning, and therefore, becomes capable of subsequently absorbing water without being covered with the solid seasoning. By the stirring after waiting for a predetermined time, the solid seasoning and the puffed dried rice blend with each other so as to be eatable.

The commercial product of the present invention eliminates the need of a heat cooker such as a microwave oven and can therefore be eaten even in mountains, at the sea, or at the time of disaster.

### Examples

Hereinafter, the present invention will be described in more detail with reference to Examples. Each characteristic of the present invention was evaluated by the following method.

### (Confirmation of behavior of puffed dried rice)

The behavior of puffed dried rice based on difference in bulk specific gravity was confirmed.

The method for producing the puffed dried rice will be described. 700 g of non-glutinous polished white rice was washed and drained, and then uniformly mixed with 14 g/kg emulsified fat or oil, 3 g/kg sucrose fatty acid ester, and 0.3 g/kg polyphosphate. The resulting rice was cooked for 20 minutes using a rice cooker (gas rice cooker PR-200EF manufactured by Paloma Co., Ltd.) in an amount of water added of 135% with respect to the mass of the rice, and steamed for 20 minutes to obtain cooked rice having a moisture content just after cooking of 50%. This cooked rice was loosened using the apparatus described in Japanese Patent No. 5436711.

The loosened cooked rice was subjected to primary drying in a drying chamber under conditions involving an intra-chamber temperature of 70°C, an air velocity of 2 to 3 m/s, and a drying time on the order of 30 minutes until its moisture content became 26%. The rice thus dried was left for approximately 30 minutes and then sieved to remove very sticky lumps of rice. Further, the rice was pressed and flattened by allowing the rice to passing through the space between rolls twice (first roll interval: 0.25 mm, second roll interval: 0.30 mm). The pressed and flattened rice was subjected to secondary drying under conditions involving an intra-chamber temperature of 80°C, an air velocity of 3 to 4 m/s, and a drying time on the order of 20 minutes until its moisture content became 16%.

The rice thus secondarily dried was left for approximately 30 minutes and then puffed and dried in a high-temperature air drier capable of spraying high-temperature airflow at a high velocity, to obtain puffed dried rice having a moisture content of approximately 8%. Here, the airflow temperature for puffing and drying was set according to Table 1 so as to attain the bulk specific gravity of interest, and the puffing and drying were performed under conditions involving an air velocity of 50 m/s and a drying time of 60 seconds.

**Table 1]**

| Puffing temperature (°C) | Bulk specific gravity (g/ml) |
|---|---|
| 150 | 0.43 |
| 146 | 0.47 |
| 144 | 0.50 |
| 143 | 0.53 |
| 140 | 0.56 |
| 138 | 0.60 |

The bulk specific gravity was calculated by putting the puffed dried rice into a 100 ml graduated cylinder, tapping the bottom of the cylinder approximately 10 times for leveling, and measuring the weight of the puffed dried rice up to the position of the 100 ml mark. For example, when the weight of the puffed dried rice having a capacity of 100 ml was 55 g, the bulk specific gravity was 55 / 100 = 0.55.

Next, 30 g of each puffed dried rice prepared according to the method described above was independently placed in a glass cup having an opening of approximately 7 cm, and 160 ml of hot water was poured into each glass cup to confirm the behavior of the puffed dried rice. The results about the behavior of the puffed dried rice based on difference in bulk specific gravity are shown in Table 2.

**Table 2]**

| Bulk specific gravity (g/ml) | Behavior of puffed dried rice |
|---|---|
| 0.43 | Rice floated at the same time of pouring of hot water and settled immediately after water absorption. |
| 0.47 | Rice floated at the same time of pouring of hot water and settled immediately after water absorption. |
| 0.50 | Rice floated at the same time of pouring of hot water and then settled gradually. |
| 0.53 | Rice floated at the same time of pouring of hot water and then settled gradually. |
| 0.56 | Some rice grains floated, whereas many rice grains remained settled. |
| 0.60 | Some rice grains floated, whereas most of rice grains remained settled. |

As is evident from Table 2, the puffed dried rice samples having a bulk specific gravity of 0.43 to 0.53 g/ml exhibited behavior in which most of rice grains floated at the same time of pouring of hot water and then settled. Here, the temporarily floated puffed dried rice settled because its self-weight was increased by water absorption. The puffed dried rice sample having a bulk specific gravity of 0.43 g/ml started to settle immediately after pouring of hot water, suggesting that this puffed dried rice particularly has a fast water absorption rate and is easily reconstituted by hot water.

On the other hand, when the bulk specific gravity was 0.56 g/ml or more, some grains of the puffed dried rice floated, whereas more than half the grains remained settled. In this context, when the puffed dried rice remains settled, most of grains of the puffed dried rice present at the bottom of the container are considered less likely to absorb water without convection of the puffed dried rice. In actuality, the puffed dried rice samples having a bulk specific gravity of 0.43 to 0.53 g/ml were reconstituted and swollen up to the water surface in the glass cup after a lapse of 5 minutes from pouring of hot water. By contrast, the puffed dried rice samples having a bulk specific gravity of 0.56 g/ml or more were hardly swollen and also had about half the height of the reconstituted puffed dried rice samples having a bulk specific gravity of 0.43 to 0.53 g/ml.

### (Sensory evaluation)

Subsequently, an instant food product comprising puffed dried rice was subjected to an organoleptic test. Examples and Comparative Examples are as follows.

### (Example 1)

72 g of puffed dried rice having a degree of puffing of 0.47 g/ml was placed in a cup-like container, and 38 g of a solid seasoning and 8 g of a dried ingredient were added to the container to prepare an instant food product comprising puffed dried rice.

### (Example 2)

72 g of puffed dried rice having a degree of puffing of 0.53 g/ml was placed in a cup-like container, and 38 g of a solid seasoning and 8 g of a dried ingredient were added to the container to prepare an instant food product comprising puffed dried rice.

### (Comparative Example 1)

The same operation as in Example 1 was performed except that 38 g of a powdered seasoning was used instead of the solid seasoning.

### (Comparative Example 2)

The same operation as in Example 2 was performed except that 38 g of a powdered seasoning was used instead of the solid seasoning.

### (Comparative Example 3)

The same operation as in Example 1 was performed except that puffed dried rice having a degree of puffing of 0.60 g/ml was used instead of the puffed dried rice having a degree of puffing of 0.47 g/ml.

### (Comparative Example 4)

The same operation as in Comparative Example 3 was performed except that 38 g of a powdered seasoning was used instead of the solid seasoning.

Next, 230 ml of hot water of 98°C or higher was poured to the instant food product of each of Examples and Comparative Examples. The cup container was loosely covered and then left standing for 5 minutes. Then, the contents were well stirred. Five experienced panelists ate the instant food product and evaluated reconstitution, unevenness, and synthesis according to the criteria given below. The sample was given the most common score among the obtained scores.

### <Reconstitution>

### Criteria

5: The sample was uniformly reconstituted by hot water.
4: The sample was reconstituted by hot water, albeit slightly insufficiently.
3: The sample was reconstituted by hot water, albeit partially insufficiently.
2: The sample was insufficiently reconstituted by hot water as a whole.
1: The sample was hardly reconstituted by hot water.

### <Unevenness>

### Criteria

5: Rice grains very poorly reconstituted by hot water were absent.
4: Rice grains very poorly reconstituted by hot water were very slightly present.
3: Rice grains very poorly reconstituted by hot water were slightly present.
2: Rice grains very poorly reconstituted by hot water were present in a fixed amount.
1: Rice grains very poorly reconstituted by hot water were present in a large amount.

### <Synthesis>

### Criteria

5: The sample was eatable and had a high commercial value.
4: The sample was eatable and had a commercial value.
3: The sample was eatable.
2: The sample was eatable, but had no commercial value.
1: The sample was not eatable.

The results of the organoleptic test are shown in Table 3.

**[Table 3]**

| | Reconstitution | Unevenness | Synthesis |
|---|---|---|---|
| Example 1 | 5 | 5 | 5 |
| Example 2 | 4 | 5 | 4 |
| Comparative Example 1 | 3 | 2 | 2 |
| Comparative Example 2 | 2 | 2 | 2 |
| Comparative Example 3 | 3 | 4 | 3 |
| Comparative Example 4 | 2 | 2 | 2 |

As shown in Table 3, the instant food products comprising the solid seasoning (Examples 1 and 2 and Comparative Example 3) were given higher scores in almost all the evaluation items than those of the instant food products comprising the powdered seasoning (Comparative Examples 1, 2, and 4). Furthermore, the instant food products of Examples 1 and 2 using the puffed dried rice having a small bulk specific gravity (in other words, well puffed rice) were given high scores in all of reconstitution, unevenness, and synthesis. Particularly, the instant food product of Example 1 was given the best scores in all the items. This is because rice having a smaller bulk specific gravity is more highly puffed, and therefore more easily absorbs water and is thus more easily reconstituted.

Example 2 was given a lower score in the item "reconstitution" than that of Example 1. This is probably because a larger bulk specific gravity than that of Example 1 requires more time for water absorption.

On the other hand, the instant food product of Comparative Example 3 resulted in lower scores as compared with Examples 1 and 2, though eatable by reconstitution by hot water. This is because in Comparative Example 3, a portion of the puffed dried rice was not reconstituted by hot water, and puffed dried rice grains very poorly reconstituted by hot water were present in some rare cases, for example. The reason why a portion of the puffed dried rice was not reconstituted by hot water is that the puffed dried rice of Comparative Example 3 was in a state where most of grains sank and overlapped with each other. Hence, it is considered that the puffed dried rice grains present at the bottom of the container were less likely to absorb water, resulting in incomplete reconstitution by hot water.

Next, the influence of the difference between the solid seasoning and the powdered seasoning will be discussed. As shown in Table 3, all the instant food products comprising the powdered seasoning were given low scores. This is probably because, when the powdered seasoning was compared with the puffed dried rice, the powdered seasoning more easily absorbed water than the puffed dried rice so that the puffed dried rice failed to absorb water as required for reconstitution by hot water. In the case of the powdered seasoning, the melted powdered seasoning covers the partial surface of the puffed dried rice and further inhibits the water absorption of the puffed dried rice. Hence, it can be confirmed from Table 3 that the puffed dried rice cannot absorb water even if the bulk specific gravity of the puffed dried rice is adjusted.

On the other hand, in the case of Examples 1 and 2 using the solid seasoning, the puffed dried rice can be separated from the solid seasoning in the container because the puffed dried rice temporarily floats. As a result, the puffed dried rice can reliably absorb water. Furthermore, the solid seasoning maintains its shape unless subjected to external force. Therefore, unlike the powdered seasoning, the solid seasoning neither covers the surface of the puffed dried rice nor hinders the water absorption of the puffed dried rice. The temporarily floated rice settles after water absorption and comes into contact with the solid seasoning. The rice has already sufficiently absorbed water to some extent when settling. Hence, its reconstitution is not inhibited by subsequent contact with the solid seasoning.

As described above, the present invention can provide an instant food product reconstitutable by hot water without the use of a heat cooker such as a microwave oven by combining puffed dried rice that temporarily floats by pouring hot water with solid roux. As a result, the instant food product can be readily eaten, for example, even in mountains, at the sea, or at the time of disaster.

## Claims

1. An instant food product comprising a container, a solid seasoning, and puffed dried rice eatable by pouring hot water, wherein
the puffed dried rice is directly stored in a container together with the solid seasoning, and
the puffed dried rice has a bulk specific gravity of 0.43 to 0.53 g/ml and a final moisture content of 5% by mass or more and 10% by mass or less.

2. The instant food product according to claim 1, wherein the container is a container made of heat-insulation foam paper.

3. The instant food product according to claim 1 or claim 2, wherein the specific gravity of the solid seasoning is greater than the specific gravity of water.

4. The instant food product according to claim 1 or claim 2, wherein the solid seasoning maintains its shape unless subjected to external force such as stirring.

5. The instant food product according to claim 1 or claim 2, wherein the solid seasoning is roux.

6. The instant food product according to claim 1 or claim 2, wherein the solid seasoning is in tablet form.

## Patentansprüche

1. Fertiglebensmittelprodukt, umfassend einen Behälter, ein festes Würzmittel und gepufften, getrockneten Reis, das durch Übergießen mit heißem Wasser essbar wird, wobei
der gepuffte, getrocknete Reis direkt in einem Behälter zusammen mit dem festen Würzmittel gelagert ist, und
der gepuffte, getrocknete Reis ein spezifisches Gewicht von 0,43 bis 0,53 g/ml und einen End-Feuchtigkeitsgehalt von 5 Massen-% oder mehr und 10 Massen-% oder weniger aufweist.

2. Fertiglebensmittelprodukt nach Anspruch 1, wobei der Behälter ein Behälter aus hitzeisolierendem Schaumpapier ist.

3. Fertiglebensmittelprodukt nach Anspruch 1 oder Anspruch 2, wobei das spezifische Gewicht des festen Würzmittels größer als das spezifische Gewicht von Wasser ist.

4. Fertiglebensmittelprodukt nach Anspruch 1 oder Anspruch 2, wobei das feste Würzmittel seine Form beibehält, sofern es keiner externen Kraft wie Rühren ausgesetzt wird.

5. Fertiglebensmittelprodukt nach Anspruch 1 oder Anspruch 2, wobei das feste Würzmittel Mehlschwitze ist.

6. Fertiglebensmittelprodukt nach Anspruch 1 oder Anspruch 2, wobei das feste Würzmittel in Tablettenform vorliegt.

## Revendications

1. Produit alimentaire instantané comprenant un contenant, un assaisonnement solide et du riz sec soufflé pouvant être consommé en versant de l'eau chaude, dans lequel
le riz sec soufflé est stocké directement dans un contenant avec l'assaisonnement solide, et
le riz sec soufflé présente une densité apparente de 0,43 à 0,53 g/ml et une teneur finale en humidité de 5 % en masse ou plus et de 10 % en masse ou moins.

2. Produit alimentaire instantané selon la revendication 1, dans lequel le contenant est un contenant en papier mousse thermo-isolant.

3. Produit alimentaire instantané selon la revendication 1 ou la revendication 2, dans lequel la densité de l'assaisonnement solide est supérieure à la densité de l'eau.

4. Produit alimentaire instantané selon la revendication 1 ou la revendication 2, dans lequel l'assaisonnement solide conserve sa forme à moins d'être soumis à une force externe telle qu'une agitation.

5. Produit alimentaire instantané selon la revendication 1 ou la revendication 2, dans lequel l'assaisonnement solide est un roux.

6. Produit alimentaire instantané selon la revendication 1 ou la revendication 2, dans lequel l'assaisonnement solide est sous forme de comprimé.
